# EUROPÄISCHE PATENTANMELDUNG

(11) **EP 0 716 139 A1**
(43) Veröffentlichungstag der Anmeldung: **12.06.1996**
(21) Anmeldenummer: 95118741.8
(22) Anmeldetag: 29.11.1995
(51) Int. Cl.: C10L 1/02

(54) **Kraftstoff für hochverdichtende selbstzündende Motoren**

(30) Priorität: 07.12.1994 DE 4443549
(71) Anmelder: VEBA OEL AG, D-45896 Gelsenkirchen (DE)
(72) Erfinder: Sunderbrink, Thomas, D-46242 Bottrop (DE)
(74) Vertreter: Berg, Dirk, Dr.

(57) **Zusammenfassung**

Die Erfindung betrifft einen Kraftstoff für hochverdichtende selbstzündende Motoren enthaltend Veresterungsprodukte von Fettsäuren aus nativen Ölen und Fetten mit C₂- bis C₈-Monoalkoholen und im wesentlichen frei von niederen Alkoholen sowie nativen Fetten und Ölen.

## Beschreibung

Die Erfindung betrifft einen Kraftstoff für hochverdichtende selbstzündende Motoren.

Aus der Praxis ist bekannt, daß mit Dieselmotoren ausgestattete Kraftfahrzeuge statt mit herkömmlichem Dieselkraftstoff, nämlich einer Mitteldestillatfraktion aus der Mineralölverarbeitung, mit Rapsölmethylester als Kraftstoff betrieben werden können, ohne daß, abgesehen von etwas geänderten Einstellvorgaben und ggfs. einer Anpassung der mit dem Kraftstoff in Berührung kommenden Dichtungsmaterialien, Änderungen am Motor vorgenommen werden müssen. Ein wesentlicher Nachteil von Rapsölmethylester, der auch gelegentlich als Biodiesel bezeichnet wird, ist sein völlig unbefriedigendes Kälteverhalten.

Aus dem druckschriftlichen Stand der Technik sind Kraftstoffgemische bekannt, die zum Betreiben von Dieselmotoren geeignet sind und Veresterungsprodukte nativer Öle enthalten.

Dokument DE 31 49 170 A1 beschreibt brennbare Mischungen, die 5 bis 60 Vol.-% eines Veresterungsproduktes von Fettsäuren mit C₁₋ bis C₃-Alkoholen sowie 20 bis 90 Vol.-% eines Gasöls und 5 bis 60 Vol.-% Methanol enthalten.

Dokument DE 31 50 988 A1 offenbart ein brennbares Gemisch, das 50 bis 90 Vol.-% eines Veresterungsproduktes von Fettsäuren mit C₁- bis C₈-Alkoholen und 10 bis 50 Vol.-% eines alkoholischen Bestandteiles enthält.

Ein höherer Gehalt an niederen Alkoholen in Dieselkraftstoffen wirkt sich nachteilig auf die Eigenschaften des Kraftstoffs aus. So wird die Cetanzahl durch den Alkoholanteil erniedrigt und der Kraftstoff erhält eine für Dieselkraftstoffe völlig untypische Siedecharakteristik. Desweiteren wird der Flammpunkt des Kraftstoffs erheblich erniedrigt, was aufgrund nationaler Vorschriften zu einer anderen Gefahrenklasseneinstufung und damit zu verschärften Auflagen hinsichtlich Umgang, Lagerung und Transport des Kraftstoffs führen kann.

Dokument DE 41 35 294 A1 offenbart Gemische zum Betreiben von Dieselmotoren, die 5 bis 90 Vol.-% eines Veresterungsprodukts von Fettsäuren mit C₁- bis C₄-Alkoholen enthalten. Die beschriebenen Treibstoffgemische enthalten als einen wesentlichen Bestandteil mindestens ein pflanzliches und/oder tierisches Öl. Aus Praxistests ist jedoch bekannt, daß im Kraftstoff enthaltene Glyceride zu Ablagerungen bzw. sogenannten Verlackungen im Brennraum des Motors führen.

Beim Rapsölmethylester liegt der cold-filter-plugging-point (CFPP), d. h. die Temperatur, bei der der Kraftstoffilter sich zusetzt, bei etwa - 7 °C bis - 11 °C, der Cloudpoint bei etwa - 3 °C bis - 10 °C und der Pourpoint, bei etwa - 14 °C bis - 16 °C. Eine wichtige Kenngröße ist der CFPP. Für einen Winterdieselkraftstoff wird von der DIN 51601 ein Wert von - 15 °C vorgeschrieben. Marktübliche Dieselkraftstoffe (Winterware) unterschreiten in der Regel - 22 °C. Ein Kraftstoff mit einem CFPP von - 7 °C wäre z. B. für Deutschland, Skandinavien, Kanada oder Österreich in der kalten Jahreszeit absolut ungeeignet. Wenn auch Cloudpoint, Pourpoint und CFPP dem Fachmann wichtige Anhaltspunkte für die Winterfahrbarkeit eines Dieselkraftstoffes liefern, so entscheidet doch letztendlich der Praxistest mit dem Fahrzeug über die Wintertauglichkeit eines Kraftstoffs. Hierzu wird das Fahrzeug samt Kraftstoff auf einem Rollenprüfstand in einer Klimakammer schrittweise abgekühlt, bis die Fahrbarkeitsgrenze des Kraftstoffs erreicht ist. Die Fahrbarkeitsgrenze von Rapsölmethylester liegt bei etwa - 10 °C.

Die Aufgabe der Erfindung besteht darin, einen Umesterungsprodukte von nativen Ölen und Fetten enthaltenden Kraftstoff zur Verfügung zu stellen, der verbesserte Kälteeigenschaften aufweist.

Diese Aufgabe wurde gelöst durch einen Kraftstoff gemäß Anspruch 1. Bevorzugte Ausführungsformen sind Gegenstand der Unteransprüche.

Zur Herstellung der Veresterungsprodukte wird von nativen Ölen und/oder Fetten ausgegangen. Als Beispiele für pflanzliche Öle seien genannt Rapsöl, Sonnenblumenöl, Sojaöl, Maisöl, Baumwollöl, Mandelöl, Erdnußöl, Olivenöl, Palmöl, Kokusöl, Kopraöl und Senföl. Als Beispiele für tierische Fette und Öle seien genannt Fischöl, Schweineschmalz und Rindertalg. Aus Gründen der Verfügbarkeit, der chemischen Zusammensetzung und der daraus resultierenden Eigenschaften der Veresterungsprodukte werden Pflanzenöle, insbesondere Rapsöl, als Ausgangsstoff bevorzugt.

Die Öle und Fette können zunächst zur Gewinnung der darin enthaltenen Fettsäuren unter Abspaltung von Glyzerin hydrolisiert bzw. verseift und ggfs. gereinigt werden. Anschließend kann als typische Veresterungsreaktion die Umsetzung mit den Monoalkoholen erfolgen. Diese Reaktion wird typischerweise säurekatalysiert durchgeführt. Zur Erhöhung der Ausbeute kann das entstehende Wasser aus dem Reaktionsgemisch entfernt und/oder Alkohol im Überschuß eingesetzt werden.

Eine andere Möglichkeit zur Gewinnung der Veresterungsprodukte besteht darin, die Öle und Fette direkt mit dem Alkohol in Form einer Alkoholyse umzusetzen. Bei diesem Verfahren wird im Wege einer Umesterung das als Öl- oder Fettbestandteil enthaltene Glyzerin durch die eingesetzten Monoalkohole ausgetauscht. Eine solche Methode wird u. a. in dem US-Patent 2.271.619 beschrieben.

Insbesondere die Veresterungsprodukte von C₄- und C₅-Alkoholen zeigen ein im Vergleich zu den entsprechenden Methylestern hinsichtlich Cloudpoint, CFPP, Pourpoint, Fahrbarkeitsgrenze und Viskosität deutlich verbessertes Kälteverhalten. Ein besonders gutes Kälteverhalten wird erreicht, wenn es sich bei der Alkoholkomponente um verzweigte und/oder sekundäre Alkohole handelt. So können beispielsweise mit Vorteil bei der Herstellung von z. B. Rapsölalkylestern auch technische Gemische verzweigter C₄- und C₅-Alkohole eingesetzt werden. Dabei kann zur Herstellung der Alkohole von den entsprechenden Alkenen bzw. Alkengemischen ausgegangen werden, die durch säurekatalysierte Hydratisierung die entsprechenden Alkohole ergeben. So ist z. B. das zur Herstellung von Rapsöl-sek.-butylester erforderliche sek.-Butanol durch säurekatalysierte Hydratisierung von 1-Buten oder 2-Buten zugänglich. Die sek.-Butylester, insbesondere Rapsöl-sek.-butylester, sind besonders geeignet, da sie von allen untersuchten Veresterungsprodukten die besten Kälteeigenschaften aufweisen.

Die sek.-Butylester, insbesondere Rapsöl-sek.-butylester, können auch zur Verbesserung des Kälteverhaltens von herkömmlichem Dieselkraftstoff (Sommerware) eingesetzt werden. Deutlich verbesserte und für die Praxis zufriedenstellende Kälteeigenschaften werden bei einem Esteranteil von mehr als 50 %, bezogen auf Volumen-Anteile (V.A.-%), erhalten.

Z. B. herstellungsbedingt kann in den erfindungsgemäßen Kraftstoffen auch noch ein Restgehalt bei der Veresterung nicht umgesetzter Alkohole und/oder nicht umgesetzter Fette und Öle vorliegen. Wegen des negativen Einflusses dieser Komponenten auf die Kraftstoffeigenschaften sollte der Kraftstoff zumindest im wesentlichen frei von niederen Alkoholen sowie von nativen Fetten und Ölen sein. Der Gehalt dieser Komponenten sollte deshalb jeweils weniger als 5 V.A.-%, insbesondere weniger als 2 V.A.-% vorzugsweise weniger als 0,5 V.A.-% betragen. Unter niederen Alkoholen werden in diesem Zusammenhang vorzugsweise Alkohole mit 8 und weniger, insbesondere mit 5 und weniger C-Atomen verstanden.

Die Veresterungsprodukte weisen gegenüber herkömmlichen Dieselkraftstoffen verbesserte Cetanzahlen auf. Sie sind mit Mitteldestillatölen bzw. mit herkömmlichen Dieselkraftstoffen in beliebigen Verhältnissen mischbar und auch in diesen Mischungen als Kraftstoff für hochverdichtende selbstzündende Motoren geeignet. Eine deutliche Verbesserung des Kälteverhaltens und der Cetanzahl ist bei einem Gehalt von weniger als 1 V.A.-% an Veresterungsprodukten nicht zu beobachten. Es ist daher bevorzugt, daß der Kraftstoff mehr als diese 1 V.A.-% an Veresterungsprodukten enthält. Bevorzugt besteht der Kraftstoff überwiegend, d. h. zu mehr als 50 V.A.-% aus den Veresterungsprodukten. Vorzugsweise sind in dem erfindungsgemäßen Kraftstoff außer ggfs. üblichen Additiven für Dieselkraftstoffe wie Detergentien, zusätzliche Cetanzahlverbesserer, Schaum- und Korrosionsinhibitoren keine weiteren Bestandteile enthalten. Auch unter Berücksichtigung eines evtl. vorliegenden Gehalts an nicht umgesetzten Alkoholen und/oder Ölen sollte der erfindungsgemäße Kraftstoff vorzugsweise mehr als 95 V.A.-% Veresterungsprodukte enthalten.

Desweiteren wurde überraschend gefunden, daß bestimmte Mischungen von Rapsölalkylestern ein im Vergleich zu den Einzelkomponenten hinsichtlich CFPP und Pourpoint verbessertes Kälteverhalten zeigen. Dies gilt insbesondere für die Mischungen Rapsölisopropylester/Rapsöl-2-methylbutlyester, Rapsölisobutylester/Rapsöl-sek.-butylester, Rapsölisobutylester/Rapsöl-sek.-amylester, Rapsölisobutylester/Rapsöl-2-methylbutylester, Rapsöl-sek.-butylester/Rapsöl-sek.-amylester, Rapsöl-sek.-butylester/Rapsöl-2-methylbutylester, Rapsöl-sek.-amylester/Rapsöl-2-methylbutylester, Rapsöl-n-proyplester/Rapsöl-2-methylbutylester. Besonders deutlich ist der Effekt bei Mischungsverhältnissen von 3 : 1 bis 1 : 3, insbesondere bei etwa 1 : 1.

Die erfindungsgemäßen Kraftstoffe werden vorzugsweise als Treibstoff für Dieselmotoren, insbesondere zum Antrieb von Kraftfahrzeugen, eingesetzt. Wegen ihrer guten biologischen Abbaubarkeit können die erfindungsgemäßen Kraftstoffe, die zumindest überwiegend aus den genannten Veresterungsprodukten bestehen, mit Vorteil in Fahrzeugen eingesetzt werden, die sich außerhalb der üblichen Verkehrswege bewegen. Dies sind z. B. forst- und landwirtschaftliche Fahrzeuge oder auch Wasserfahrzeuge in ökologisch empfindlichen Gewässern bzw. Trinkwassergewinnungsgebieten.

Desweiteren betrifft die Erfindung die Verwendung von Veresterungsprodukten von Fettsäuren aus nativen Ölen und Fetten mit C₂₋ bis C₈-Mono-Alkoholen als Cetanzahlverbesserer in Kraftstoffen für hochverdichtende selbstzündende Motoren.

Die vorliegende Erfindung soll anhand der nachstehenden Beispiele näher erläutert werden.

### Beispiele

### Herstellung der Veresterungsprodukte

8 Mol Rapsölfettsäuregemisch und 12 Mol sek.-Butanol wurden unter Zusatz von 300 ml n-Hexan und 10 g p-Toluolsulfonsäure am Wasserabscheider zum Sieden erhitzt bis sich kein Wasser mehr abschied. Nach Abdestillieren des Chloroforms wurde das Produkt mit Wasser gewaschen. Nach der Destillation im Vakuum bei 0,2 mbar wurde der reine Rapsöl-sek.-butylester erhalten. Die Ausbeute betrug 85 %.

Die Rapsölalkylester mit den übrigen C₂- bis C₈-Alkoholen lassen sich analog mit ähnlichen Ausbeuten herstellen.

Nachfolgend sind die Kennwerte von Rapsöl-sek.-butylester im direkten Vergleich zu Rapsölmethylester dargestellt.

| | **Rapsölmethylester** | **Rapsöl-sek.-butylester** |
|---|---|---|
| Cloudpoint | - 5,5 °C | - 24,0 °C |
| CFPP | - 9 °C | - 21 °C * |
| Pourpoint | - 14,4 °C | - 30,8 °C |
| Viskosität bei - 10 °C | 740 - 2500 mPa s | -- |
| Viskosität bei - 25 °C | fest | 170 - 180 mPa s |
| visuelle Beurteilung nach 3 Tagen bei - 20 °C | fest | klar und flüssig |

| | | |
|---|---|---|
| * CFPP liegt viskositätsbedingt oberhalb des Cloudpoints | | |

Die obigen Kennwerte sind dem Fachmann ein deutlicher Hinweis für die verbesserte Winterfahreigenschaften von Rapsöl-sek.-butylester gegenüber Rapsölmethylester.

| ***Eigenschaften von Rapsölalkylestern*** | | | | | |
|---|---|---|---|---|---|
| | **Ausbeute [Gew.-%]** | **Cetanzahl** | **Cloudpoint [°C]** | **CFPP [°C]** | **Pourpoint [°C]** |
| Rapsölethylester | 85 | 58,0 | - 12,2 | - 15 | - 17,1 |
| Rapsöl-n-propylester | 84 | 62,0 | - 13,3 | - 16 | - 18,4 |
| Rapsölisopropylester | 69 | 56,0 | - 17,1 | - 18 | - 26,3 |
| Rapsöl-n-butylester | 87 | 65,0 | - 14,2 | - 17 | - 19,7 |
| Rapsölisobutylester | 89 | 61,0 | - 17,7 | - 19 | - 31,0 |
| Rapsöl-sek.-butylester | 85 | 59,0 | - 24,0 | - 21 | - 30,8 |
| Rapsöl-sek.-amylester | 86 | 61,0 | - 24,4 | - 16 * | - 32,3 |
| Rapsöl-2-methylbutylester | 85 | 64,0 | - 20,7 | - 17 * | - 36,7 |

| | | | | | |
|---|---|---|---|---|---|
| Bemerkung: * Viskosität der Proben während der Messung stark ansteigend. | | | | | |

Die in der Tabelle aufgeführten Ester wurden analog Beispiel 1 mit den entsprechenden Alkoholen hergestellt. Cloudpoint, CFPP und Pourpoint liegen jeweils deutlich niedriger als beim Rapsölmethylester.

| Kältefahrbarkeit von Dieselkraftstoff/Rapsöl-sek.-butylester-Mischungen | | | | |
|---|---|---|---|---|
| **Dieseikraftstoff** (Sommerware) [V.A.-%] | **Rapsöl-sek.- butylester** [V.A.-%] | **Cloudpoint** [°C] | **CFPP** [°C] | **Fahrbarkeitsgrenze** [°C] |
| 100 | 0 | 2,5 | - 5 | - 5 |
| 75 | 25 | 1,8 | - 9 | - |
| 50 | 50 | 0,8 | - 10 | - 10 |
| 25 | 75 | - 3,6 | - 16 | - 17 |
| 0 | 100 | - 23,1 | - 25 | <- 24 * |

| | | | | |
|---|---|---|---|---|
| * Die Fahrbarkeitsgrenze liegt unter - 24 °C. Eine tiefere Temperatur war mit dem zur Verfügung stehenden Rollenprüfstand aus technischen Gründen nicht zu erreichen. | | | | |

### Versuchsdurchführung des Kältefahrbarkeitstests

Der Kraftstoff wurde auf ca. 30 °C erwärmt, in den Kraftstofftank eingefüllt und die Kraftstoffleitung gespült. Das Fahrzeug wurde dann auf den im Labor ermittelten CFPP abgekühlt und der Testzyklus durchgeführt. Dieser besteht aus Starten und 1 Minute Leerlauf, dann 3 Minuten Teilgasbeschleunigung und Konstantfahrt mit 60 km/h und anschließend 15 Minuten Vollgasbescheunigung und Konstantfahrt bei 120 km/h. Das Fahrzeug wird dann in 2 °C-Schritten weiter abgekühlt und der Testzyklus jeweils wiederholt bis die Fahrbarkeitsgrenze erreicht ist.

| Kälteeigenschaften von Mischungen von Rapsölalkylester mit unterschiedlichen Alkylresten. | | | | | |
|---|---|---|---|---|---|
| | | **Mischungsverhältnis** | **Cloudpoint [°C]** | **CFPP [°C]** | **Pourpoint [°C]** |
| Rapsölisopropylester | Rapsöl-2-methylbutylester | 1 : 1 | -21,9 | -20 | -34,9 |
| Rapsölisobutylester | Rapsöl-sek.-butylester | 1 : 1 | -20,5 | -22 * | -35,6 |
| Rapsälisobutylester | Rapsöl-sek.-amylester | 1 : 1 | -20,5 | -23 | -39,2 |
| Rapsölisobutylester | Rapsöl-2-methylbutylester | 1 : 1 | -19,1 | -21 * | -39,2 |
| Rapsöl-sek.-butylester | Rapsöl-sek.-amylester | 1 : 1 | -24,1 | -26 * | -35,5 |
| Rapsöl-sek.-butylester | Rapsöl-2-methylbutylester | 1 : 1 | -22,3 | -25 | -44,3 |
| Rapsöl-sek.-amylester | Rapsöl-2-methylbutylester | 1 : 1 | -22,2 | -24 | -37,4 |
| Rapsöl-n-proyplester | Rapsöl-2-methylbutylester | 1 : 3 | -18,5 | -20 | -42,2 |
| Rapsölisobutylester | Rapsöl-sek.-amylester | 1 : 3 | -22,4 | -23 | -35,9 |
| Rapsöl-sek.-butylester | Rapsöl-2-methylbutylester | 1 : 3 | -21,6 | -24 | < - 59 |
| Rapsöl-sek.-amylester | Rapsöl-2-methylbutylester | 1 : 3 | -21,7 | -23 | < - 59 |

| | | | | | |
|---|---|---|---|---|---|
| * Viskosität der Proben während der Messung stark ansteigend | | | | | |

Mindestens einer der drei jeweils ermittelten Werte liegt besser als das rein arithmetische Ergebnis aus den Werten der Einzelkomponenten.

## Patentansprüche

1. Kraftstoff für hochverdichtende selbstzündende Motoren enthaltend Veresterungsprodukte von Fettsäuren aus nativen Ölen und Fetten mit C₂- bis C₈-Monoalkoholen und im wesentlichen frei von niederen Alkoholen sowie nativen Fetten und Ölen.

2. Kraftstoff nach Anspruch 1 dadurch gekennzeichnet, daß er mehr als 1, vorzugsweise mehr als 50, insbesondere mehr als 95 V.A.-%, an Veresterungsprodukten enthält.

3. Kraftstoff nach einem der Ansprüche 1 oder 2, dadurch gekennzeichnet, daß die Fettsäuren zumindest überwiegend aus Pflanzenölen, insbesondere Rapsöl, stammen.

4. Kraftstoff nach mindestens einem der vorstehenden Ansprüche, dadurch gekennzeichnet, daß die Monoalkohole C₄₋ und/oder C₅-Alkohole sind.

5. Kraftstoff nach mindestens einem der vorstehenden Ansprüche, dadurch gekennzeichnet, daß die Monoalkohole insbesondere verzweigte und/oder sekundäre Alkohole sind, vorzugsweise sek.-Butylalkohol.

6. Verwendung von Veresterungsprodukten von Fettsäuren aus nativen Ölen und Fetten mit C₂- bis C₈-Monoalkoholen als Cetanzahlverbesserer in Kraftstoffen für hochverdichtende selbstzündende Motoren.
